(19)

**Europäisches Patentamt**

**European Patent Office**

**Office européen des brevets**

(11) **EP 1 304 879 A1**

(12) **EUROPEAN PATENT APPLICATION**

(43) Date of publication:
**23.04.2003 Bulletin 2003/17**

(51) Int Cl.⁷: **H04N 7/167**, G11B 20/00,
H04N 7/18

(21) Application number: **01203969.9**

(22) Date of filing: **22.10.2001**

| | |
|---|---|
| (84) Designated Contracting States:<br>**AT BE CH CY DE DK ES FI FR GB GR IE IT LI LU**<br>**MC NL PT SE TR**<br>Designated Extension States:<br>**AL LT LV MK RO SI** | (72) Inventors:<br>• **Roelofsen, Gerrit**<br>  **2331 AH Leiden (NL)**<br>• **Gelbord, Boaz Simon**<br>  **1018 VV Amsterdam (NL)** |
| (71) Applicant: **Koninklijke KPN N.V.**<br>**9726 AE Groningen (NL)** | (74) Representative: **Prins, Adrianus Willem**<br>**Vereenigde,**<br>**Nieuwe Parklaan 97**<br>**2587 BN Den Haag (NL)** |

(54) **Monitoring apparatus, computer program and network for secure data storage**

(57)    A monitoring apparatus, a computer program and a network are disclosed for monitoring a representation. The representation comprises a first data string and afterwards two or more output strings are generated by the monitoring apparatus which output strings are stored at separate storage locations.

Fig.2

EP 1 304 879 A1

**Description**

*BACKGROUND*

*1. Field of the invention*

The invention relates to a monitoring apparatus, a computer program and a network for secure storage of data.

*2. Background*

The growing societal demand for privacy is on a collision course with the increased need for surveillance such as e.g. camera surveillance, arising from growing crime and civil disputes. As an example it happens more and more frequently that specific areas, such as e.g. main city squares, airports or stadiums hosting sports events or rock concerts, need to be watched because of rising crime, expected troubles with unknown groups of people or more general security considerations. On the other hand the privacy of individuals has become a fundamental right of people. Camera surveillance will obviously be in conflict with the right of privacy and will therefore encounter strong opposition of privacy advocates since it can be seen as encroaching on the rule of law abiding citizens to conduct their affairs without being watched.

From the above it can be concluded that there is a need to avoid or soften this collision between security and privacy considerations by providing a monitoring apparatus which can monitor events while still preserving the privacy of those being filmed. State of the art closed circuit television (CCTV)cameras and other digital surveillance systems do not provide a solution to this problem.

SUMMARY

It is an aim of the invention to improve the existing surveillance apparatus in such a way that the modern day requirements put on both security and privacy are met. This result can be achieved by providing a monitoring apparatus that monitors representations of objects such as for e.g. images of people present in a specific area, and decomposing the recorded image. A representation of an object might be identical to the object in its entirety, but can refer to a characteristic part, such as the face of a person, of the object as well. In a preferred embodiment the decomposed recorded image can only be viewed by reconstruction of the decomposed parts of the image if a number of different parties consent to do so. Those parties could include the police, a privacy advocacy group, and a party that is primarily responsible for that specific area. Criteria for selection of the parties can e.g. include the requirement that at least one of the parties has a high degree of independency, i.e. is not involved in the situation whatsoever.

In a preferred embodiment of the invention such a monitoring apparatus generates from a first data string representing the image two or more output strings. There are several methods by which one can generate two or more output strings that in combination provide the first data string once again. In an exemplary embodiment dealing with e.g. three output strings, the first two of the three output strings is generated using random means such as e.g. measurements from an internal clock or thermal measurements. The third output string is then chosen so that the binary addition modulo 2 of the three output strings yields the first data string. The output strings can be transmitted to separate storage locations. The first data string and the two or more output strings can be combined at or near the monitoring apparatus in order to obtain an additional output string.

The monitoring apparatus can be a digital camera or other data source having digital data strings as an output. In a variant the monitoring apparatus is an analog camera equipped with an analog-digital conversion module.

The output strings and/or additional output strings can be stored in separate locations. The term "stored" here refers to having the data available in any possible manner such as registration of the location of the data, saving the data on a data carrier, knowing the whereabouts of the data somewhere in a network etc.

Moreover it is noted that separate locations not necessarily refers to physical separation but also comprises e.g. different memory areas in a single data memory, e.g. a hard disc. Preferably the separate locations are not located in the neighbourhood of the camera. For this purpose the monitoring apparatus can be equipped with network communication means to enable transmission of the output strings and/or additional output strings to these separate storage locations over a network. In an embodiment the strings are encrypted by encryption means at the monitoring apparatus before they are sent over the network, using e.g. encryption keys. Moreover state of the art compression techniques can be applied to the various output strings before they are sent to the specific storage locations.

In a variant at least one of the storage locations can be situated in or near the monitoring apparatus. It can e.g. be that all but one storage locations are situated outside the neighbourhood of the monitoring apparatus. This provides the advantage that in the case that all (minus one) output strings which are stored at a certain distance and therefore have to be transported over that distance, could be intercepted during that data transport, the output string that is stored at or near the camera can not be intercepted. As a result the image taken by the monitoring apparatus cannot be reconstructed even if all strings transmitted over the network have been intercepted. In another variant all storage locations might be situated in or near the monitoring apparatus. Storage within the monitoring apparatus can be obtained in various kinds of known data memories, like tapes, harddisc, CD, DVD etc. Compression of the data strings can be advantageously applied in this variant as well.

In order to achieve the balance needed between security and privacy considerations as described above the storage locations containing the various output strings are preferably not directly available to all the parties concerned. For this purpose assessment means are provided to assess the access rights of the parties to a particular storage location storing at least one of the various output strings, such as e.g. a personal identification number (PIN) or password. In an embodiment of the invention all the various output strings are needed to reconstruct the image whereas the parties concerned only have access rights to just a single storage location containing one output string. If a situation arises where one of the parties concerned or a third party not having access rights themselves wants to reconstruct the image as taken by the monitoring apparatus all parties having access rights need to consent to reconstruct the image(s). Such a situation might e.g. be theft in a shop, riots in a stadium or fire at the airport.

In a variant not all output strings are needed to reconstruct the image but redundant output strings are generated at the monitoring apparatus by selection means to select selected output strings from the two or more output strings. Registration means such as the generation of strings using techniques in such a way that certain predefined subsets allow for the reconstruction of the image can register which strings are needed to reconstruct the image, by e.g. assigning a code to an output string. This can have advantages if for example one wants to give certain parties greater authority in reconstucting the original data string than other parties.

In a variant of the invention the monitoring apparatus is equipped with an event trigger for event detection. This event trigger can cause the generation of output strings and transmission of these output strings to the separate storage locations to substantially take place only if e.g. a change of a substantially steady image is detected. Such a change might be the result of the movement of a person or an object in an otherwise "movement-free" area. An event trigger can e.g. be based on well-known image-recognition techniques. An example is a camera installed near an emergency exit to a bank which begins recording when it detects that someone is passing through the exit. This detection would take place through an event detector, which can take the form of image recognition software or of a physical detector such as an infrared detector. Such event detectors alert the camera when the reference event has occurred. The presence of an event trigger at or near the monitoring apparatus has the advantage that less irrelevant data, i.e. the various output strings generated from the first data string, are stored at the separate locations.

In an embodiment of the invention the monitoring apparatus is equipped with watermarking means in order to assign watermarks to the first datastrings and/or output strings and/or additional output strings, e.g. by insertion of a watermark string in the respective strings. These watermarks can comprise an identifier referring to its origin, i.e. the monitoring apparatus. Moreover the watermark can comprise a timestamp referring to the timeframe in which the first data string was recorded or in which the two or more output strings and/or additional output strings were recorded. Also the storage location for the specific output string can be part of said watermark, e.g. a download watermark.

It is noted that the previous embodiments or variants of the previous embodiments of the invention can be combined.

SHORT DESCRIPTION OF THE DRAWINGS

Figure 1 shows a security concept according to an embodiment of the invention;
Figure 2 shows a monitoring apparatus according to an embodiment of the invention.

DESCRIPTION

For the purpose of teaching the invention, preferred embodiments of the method and devices of the invention are described in the sequel. It will be apparent to the person skilled in the art that other alternative and equivalent embodiments of the invention can be conceived and reduced to practice without departing from the true spirit of the invention, the scope of the invention being only limited by the claims as finally granted.

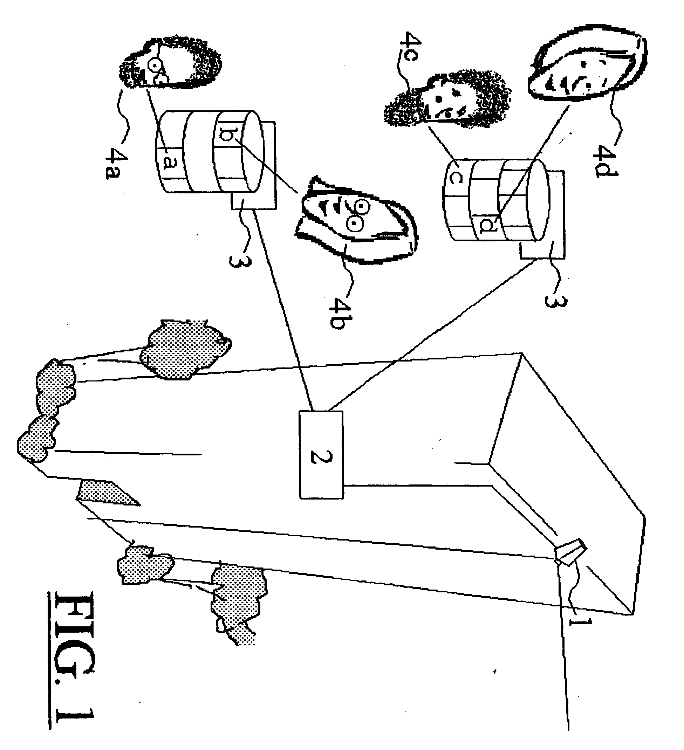

In figure 1 an embodiment of the invention is shown illustrating the employed security system. The system comprises a monitoring apparatus 1, e.g. a data source such as a digital camera connected to a processor 2. The processor 2 can be, but is not necessarily, an integral part of the monitoring apparatus 1. The processor 2 in an embodiment generates at least two output strings from a first data string provided by the monitoring apparatus 1 and transmits these output strings to separate storage locations 3. Those storage locations 3 are accessible by different parties 4a...d, each of them having accession rights for e.g. only one storage location, by means of an individual identifier/password combination, stored in the storage system 3. The storage locations may be physically located within one storage system or within physically separated storage systems. In an embodiment of the invention one party has the rights to access to one de-compiled file and upload it to processor 2 when desired. In that way re-compilation of (a replica of) the original (image) file can be achieved after several parties have accessed their own de-compiled files and uploaded them to the processor 2. In processor 2 uploaded files are combined, resulting in a reconstruction of the original.

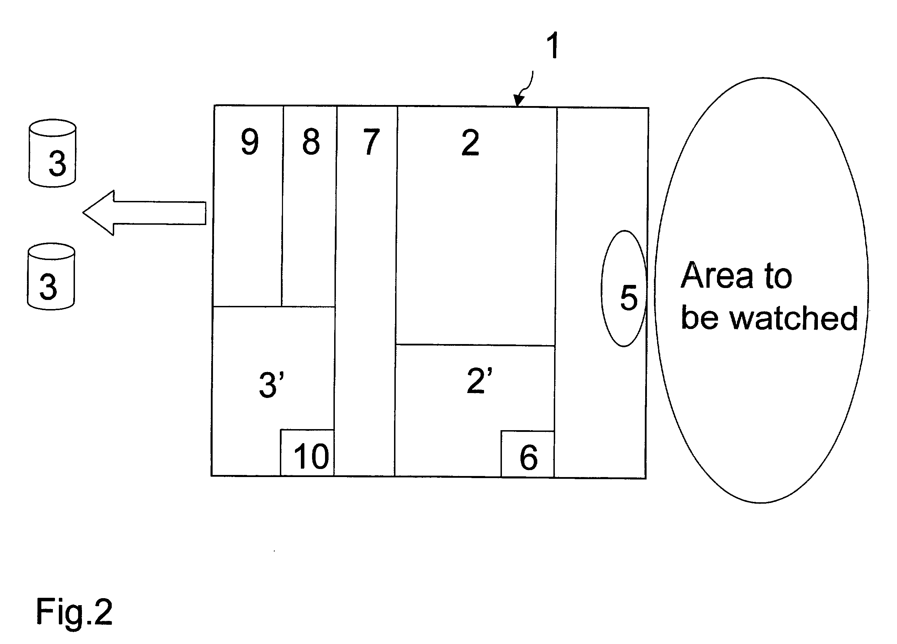

In figure 2 an embodiment of the monitoring apparatus 1 according to the invention is shown, identifying several modules 2-10 that in this preferred embodiment are part of a digital camera. It is noted that any kind of data source can be employed, e.g. also an analog camera the output of which can be digitalised by an analog-digital conversion module.In the embodiment as shows in figure 2 the processor 2 is an integral part of the camera.

The camera 1 monitors an area to be watched. Such areas might e.g. be main city squares, shopping malls, airports or stadiums hosting sports events or rock concerts. The camera 1 is equipped with event triggering means that only activate the processor 2 of the camera 1 if "something happens". One might e.g. think of a camera 1 monitoring a normally speaking "movement free" area, the event triggering any kind of movement in this area. Such event triggers can be implemented either using well-known image recognition techniques or using physical means such as infrared detection.

The camera 1 provides a first data string which is generated as a consequence of the monitoring of representation such as images of person entering the area to be watched. The first data string is fed to the processor 2 which generates at least two output strings from the first data string and is suited to generate additional output strings and watermark the strings as will be explained in more detailed now.

Let the following parameters be defined as:

| | |
|---|---|
| t | Number of parties |
| $P\_1,...,P\_t$ | Parties receiving the shared images |
| C | Camera C |
| $K\_1,...,K\_t$ | Secret keys of the parties 1 to t |
| $T\_C$ | Time interval at camera C |
| $DK\_i$ | Derived key for party i |
| $D\_\{T\_C\}$ | Complete image for camera C at time T |
| $D\_\{\{T\_C\}\_i\}$ | Un-watermarked shares, i from 1 to t |
| $M\_\{\{T\_C\}\_i\}$ | Watermarked shares, i from 1 to t |

The various parties whose consent will be needed to reconstruct the representation are denoted as $P\_1$, $P\_2$, ...,$P\_t$. A particular camera 1 is denoted by C. The values that follow (such as keys and so forth) will all be taken to be indexed with respect to the camera C. This will be denoted by the subscript C.

When a particular location is to have a camera 1 C installed, the camera 1 is provided, in a tamper-resistant module, the keys $K\_1$, $K\_2$,...,$K\_t$ of the parties $P\_1$,...,$P\_t$ respectively. This can be done using PKI for example, or otherwise can be done at the manufacturing stage itself.

The camera 1 will have a defined time interval that contains a predetermined number of data frames (or alternately a predetermined elapsed time). Let the time on the camera be defined as $T\_C$. Thus in this embodiment $T\_C=0$ for the first frame, $T\_C=1$ for the second, and so forth. For each value of i, $1<=i<=t$, the camera C (in fact processor 2) shall calculate the following key for the present value of $T\_C$:

$DK\_i$=Derived Key($P\_i$, $T\_C$, C, (optionally-names of the parties $P\_1$,....,$P\_t$)) (*)

This derived key can be obtained in numerous ways. In this particular embodiment a one-way hash function like SHA-1 will be used.

As well, each of the parties $P\_1$,...,$P\_t$ shall calculate (*) for its own value of i.

The camera 1 shall then transmit the current digital image, denoted $D\_\{T\_C\}$ as follows. The image $D\_\{T\_C\}$ will first be assigned a digital watermark by the processor 2, to obtain a new $D\_\{T\_C\}$ containing a general watermark. The image $D\_\{T\_C\}$ shall be divided into a number of t equal "portions", in the following manner. Regarding each $D\_\{T\_C\}$ as a matrix over some ring (which depends on the resolution of the picture), the processor 2 shall assign arbitrary matrices $D\_\{\{T\_C\},i\}$, for i=1 to t-1, in an independent, arbitrary (random) manner. Then the last matrix $D\_\{\{T\_C\},t\}$ shall be assigned in such a way such that:

$$D\_\{\{T\_C\}\_1\}+D\_\{\{T\_C\}\_2\}+...+D\_\{\{T\_C\}\_t\}\} = D\_\{T\_C\}$$

Now the processor 2 shall calculate a new image $M\_\{\{T\_C\}\_i\}$ based on $D\_\{\{T\_C\}\_i\}$, where $M\_\{\{T\_C\}\_i\}$ is equal to $D\_\{\{T\_C\}\_i\}$, with a download digital watermark that contains the identifier of C, $T\_C$, i, and the current date.

As well, the values of the other parties (those values in 1,...,t not equal to i) may optionally be placed on the digital watermark.

The image (i.e. matrix) $M\_(\{T\_C\}\_i)$ is then sent to the party i by e.g. networking communication means 9, encrypted with $K\_i$. In one embodiment, a hashed value of $M\_\{\{T\_C\}\_i$ is sent to all the parties 1 through t.

Now suppose one of the parties wants to reconstruct the image. Since all the parties have a completely random image, none will be able to reconstruct the image without the co-operation of the other parties.

However, if the parties operate together, together they will be able to reconstruct the image by combining the constituent parts. In this embodiment an uploading watermark is added to each share $M\_\{T\_C\}\_i$ before the re-composition begins. Each party can then verify if the share it is receiving from the other party is valid.

Below the method according to the invention will be illustrated by a simplified example. In this example watermarking and encryption of the strings are not shown. Starting from an original data string produced by the camera: 01111000011110111111100011001111100000011011101110..

three independent random output strings are generated.

string a: 11010010001010111100011011101110000100010101100011..
string b: 11000001011100011011110110101000010100110100011001..
string c: 01110100111000011110010011101111100100011010100000..

According to an embodiment of the invention those three output strings and the original data string are combined by calculating for each bit position the sum modulo 2 (indicated as "[+]") of the bit values of string a, string b and string c. E.g. for bit position 1 (from the left) this is 0[+]1[+]1[+]0 = 0; for bit position 2 this is 1[+]1[+]1[+]1 = 0; for bit position 3 this is 1[+]0[+]0[+]1 = 0; ; for bit position 4 this is 1[+]1[+]0[+]1 = 1; etc. This results in a fourth additional output string d as shown below:

string d: 00011111110000000011000111100111000010011011011010100..

All (four) output strings a-d (generated from the first data string) are stored separately in storage locations 3 and/or 3'.

For retrieval of a (re-composed) replica of the first data string from the separately stored output strings a-d, those strings are combined by calculating for each bit position the sum modulo 2 ("[+]") of the four bit values of the individual output strings,

string a: 11010010001010111100011011101110000100010101011..
string b: 11000001011100011011110110101000010100110100011000..
string c: 01110100111000011110010011101111100100011010101..
string d: 0001111111000000011000111100111000010011011011101..

resulting in the replica string:
01111000011110111111100011001111100000011011..
which is identical to the first data string.

Expanding this example with watermarking the first data string by the processor 2 as well as the output strings strings, results into the following.

Again, the camera string is:
01111000011110111111100011001111110000000..

Watermarking with a (in this case very simple 6-bits watermark header string "000000") results into:
00000001111000011110111111100011001111110000000..

Firstly, the processor 2 generates three random output strings:

string a: 11010010001010111100011011101110000100010101010..
string b: 01011100011011110110101000010100110100011001..
string c: 00011110010011101111100100011010100000010100110..

After that processor 2 calculates output string 4 by summing modulo 2 bit-by-bit the watermarked camera string and the random output strings 1 to 3, resulting into:

string d: 1001000111101011101110100001000111011101010101..

Next, the output strings are provided with individual (download) watermark headers "000001", "000010", "000011" and "000100" respectively:

a: 000001 11010010001010111100011011101110000010001010110..
b: 000010 01011100011011110110101000010100110100011001101..
c: 000011 00011110010011101111100100011010100000101001100..
d: 000100 10010001111010111011101000010001110111010101011..

These output strings may be encrypted in the processor 2 or in a separate encryption module 8 and transmitted to separate storage locations 3 and/or 3', where they are stored, either in encrypted form or in original (decrypted) form.

In the retrieving and re-composition stage of the process, the output and additional output strings a to d are transmitted to the central processor 2, where the individual watermarks will be checked on validity. If correct, the individual watermarks are deleted, resulting into the strings a-d:

string a: 11010010001010111100011011101110000010001010110..
string b: 01011100011011110110101000010100110100011001101..
string c: 00011110010011101111100100011010100000101001100..
string d: 10010001111010111011101000010001110111010101011..

which, bit-by-bit, are summed modulo 2, resulting into a replica of the watermarked first data string as generated by the camera 1:

00000001111000011110111111110001100111111000000..

The camera watermark can be checked then and, if correct, the watermark can be deleted, resulting into a replica of the first data string:

01111000011110111111110001100111111000000..

It is noted that it may be advantageous in view of security to generate more output strings then actually will be used for re-composition. A method hereto is to generate a number of redundant output strings in the processor, indicated by 2' in figure 2, and to label those strings, within those strings themselves or within the processor 2', by an redundancy/relevance code. Only strings having such code indicating that that string is essential for recovering the original string, will be processed in processor 2 in the reconstruction process of the image as described above. For instance, in the above example not three but six decomposition strings are generated, but string d is calculated only using strings a to c (equal to the above example); strings e to g only are redundant "dummies". In this example the redundancy/relevance code is formed by the first watermark bit. Another, may be better, option is to register, in the processor 2' register 6, which strings are relevant for recovering a replica of the original string, and which are not.

a: 00000111010010001010111100011011101110000100010101100..
b: 00001001011100011011110110101000010100110100011001011..
c: 00001100011110010011101111100100011010100000101001101..
d: 00010001011001101110100001111101010101110010111010101..
e: 10010111000001001011011000001001111110010100011011110..
f: 10011011010001011100011010001011111111010110110001100..
g: 10011111011000000011011000010111000101000111000101100..

Instead of producing a number of redundant random strings (e-g), another option is to calculate one or more additional output strings from one or more random strings, in the same way as string d was calculated form strings a to c. For instance, first a series of four random strings is generated, followed by a fifth string, which is calculated by summing modulo two the bits of the original string and those of random strings one and three (shorter: string e results from strings a and c). Further, a sixth string f is made, by summing modulo two the bits of (again) the first data string and the random strings (an arbitrary choice) a, c and d (in short: string f results from strings a, c and d). In this way another redundancy is created, e.g. by the string couples a, c and e resp. a, b, d and f. An replica of the first data string can be reconstructed from either the first couple of strings a, c and e, or from the second couple of strings a, b, d and f, in both case by summing modulo two the respective bits of the strings of the first couple or by summing modulo two the respective bits of all strings of the second couple. Processor 2 needs to register in register 6 which strings belong to respective couples and are able to reproduce together a replica of the original.

Finally, it may be advantageous to make use of different watermarks for downloading and uploading of the output strings respectively. In that case, on downloading the strings to the storage location 3, the processor 2 may assign download watermarks to the output strings, while the storage means 3 may assign, on uploading from the storage location to the processor 2, upload watermarks. The same may apply for the first data string and its reconstructed string.

In order to enable the monitoring apparatus 1 to perform the functions as mentioned above as well as additional functions, the monitoring apparatus 1 can be equipped with several hardware or software modules. Figure 2 shows:

2 - processor substantially enabling the generation of the output strings and the additional output strings as well as the watermarking strings;
2' - selection means as part of the processor that enables redundant strings to be generated, i.e. the selected output strings;
3 - storage locations for the output strings not being an integral part of the camera;
3' - storage location(s) for the output strings being an integral part of the camera;
5 - event trigger;
6 - register to store the relevance of the selected output string to the reconstruction process of the first data string;
7 - compression means;
8 - encryption means;
9 - network communication means;
10 - assessment means;

The function of the processor 2 and 2' and register 6 and encryption means 8 has been explained above in detail.

The separate storage of the various data strings, i.e. output strings, additional output strings and/or selected output strings, can be done at or near the camera 1 as well as outside the camera as shown by 3' resp. 3. As stated before separate storage not necessarily refers to separate physical locations. The separate storage locations are provided with assessing means 10 in order to determine the access right of a party requesting access to data string stored at a specific storage location. Only if a party is authorized this party can actually retrieve the data string stored at that specific storage location.

Advantageously compression of the data strings, applying state of the art compression techniques, is performed by compression means 7. Compressing of the data strings can be done in order to reduce storage capacity at the storage locations and to reduce bandwidth usage if the data strings are to be transmitted over a network.

The monitoring means 1 is preferably supplied with networks communication means 9 in order to enable the transmittal of the various output strings to separate storage locations away from the monitor apparatus.

As will be clear to the man skilled in the art several of the modules can coincide, such as the encryption means that might be part of the processor 2 as well as being a separate module 8. Moreover the sequence of the modules can be modified, e.g. compression of the data at 7 can also be applied to the data strings before encryption of the data strings has been performed.

**Claims**

1. Monitoring apparatus for monitoring a representation of an object, said monitoring apparatus comprising means for converting said representation into at least one first data string;
   means for generating two or more output strings from which said first data string can be reconstructed and means for transmitting said two or more output strings to separate storage locations

2. Monitoring apparatus according to claim 0 wherein said apparatus is a digital camera.

3. Monitoring apparatus according to claim 0 wherein said apparatus is an analog camera the output of which is digitalised by an analog-digital conversion module for obtaining said first data string.

4. Monitoring apparatus according to any of the claims 0 - 0 wherein combination means are provided to combine said two or more output strings with each other and/or with said first data string resulting in at least one additional output string.

5. Monitoring apparatus according to any of the preceding claims wherein network communication means are provided for transmission of said two or more output strings and/or additional output string over a network.

6. Monitoring apparatus according to claim 0 wherein said separate storage locations are not part of said monitoring apparatus and said network is used for transmission of said two or more output strings and/or additional output strings to said separate storage locations

7. Monitoring apparatus according to any of the claims 0-0 wherein at least one separate storage location for storing said output string and/or additional output string is located at or near said monitoring apparatus.

8. Monitoring apparatus according to claim 0 wherein the separate storage locations being part of said monitoring apparatus are provided with means to assess the access rights of parties requesting retrieval or access to of one or more output strings and/or additional output strings.

9. Monitoring apparatus according to any of the preceding claims wherein event triggering means are provided in order to generate said two or more output strings and transmit these output strings only if said representation has changed with respect to an earlier representation.

10. Monitoring apparatus according to any of the preceding claims wherein selection means are provided to obtain a selection of selected output strings from said two or more output strings.

11. Monitoring apparatus according to claim 0 wherein said selected output strings are combined with each other and said first data string by using said combination means as recited in claim 4 to obtain at least one additional output string

12. Monitoring apparatus according to claims 0 or 0 wherein registration means are provided to register said selected output strings and/or said additional output string.

13. Monitoring apparatus according to claim 0 wherein said registration means assigns a code to said selected output strings and/or additional output string.

14. Monitoring apparatus according to any of the preceding claims wherein compression means are provided to compress said first data string, said output strings, said selected output strings and/or said additional output strings.

15. Monitoring apparatus according to any of the preceding claims wherein watermarking means are provided to assign a watermark string to said first datastring.

16. Monitoring apparatus according to any of the preceding claims wherein watermarking means are provided to assign a watermark string to substantially each of said two or more output strings and/or said at least one additional output string and/or said replacement string.

17. Monitoring apparatus according to claims 0 or 0 wherein said watermarking means assign a watermark string to said first datastring and/or said two or more output strings comprising an identifier referring to said monitoring apparatus.

18. Monitoring apparatus according to claim 0 wherein said monitoring apparatus identifier comprises a time stamp referring to the generation of said two or more output strings or the transmission of said two or more output strings to said separate storage locations.

19. Monitoring apparatus according to claims 0 or 0 wherein said watermark string comprises an identifier referring to said separate storage locations.

20. Monitoring apparatus according to any of the preceding claims wherein encryption means are provided to encrypt said two or more output strings and/or additional output string and/or selected output strings before these strings are transmitted by said transmission means to said separate storage locations.

21. Monitoring apparatus according to claim 0 wherein said encryption means use an encryption key which is a function of said identifiers referring to said separate storage locations.

22. A computer program for running on a computer system at least including software code portions performing generation of two or more output strings from which a first data string can be reconstructed, said first data string being obtained from converting a representation of an object monitored by a monitoring apparatus and transmission of said output data strings to separate storage locations.

23. A computer program according to claim 0 wherein said software code portions further include combination portions to combine said two or more output strings with each other and/or with said first data string resulting in at least one additional output string.

24. A computer program according to claims 0 or 0 wherein said software code portions further include portions to select selected output strings from said two or more output strings.

25. A computer program according to claim 0 wherein said software code portions further include portions to combine said selected output strings with each other and first data string to obtain at least one additional output.

26. A computer program according to any of the claims 0 - 0 wherein said software code portion further include portions to compress said first data string, said output strings, said additional output strings and/or said selected output strings.

27. A computer program according to any of the claims 0 - 0 wherein said software code portions further include portions to assign a watermark to said first data string, said output strings, said additional output strings and/or said selected output strings.

28. A computer program according to claim 0 wherein said watermark comprises an identifier referring to said monitoring apparatus and/or a time stamp referring to the generation of said two or more output strings or the transmission of said two or more output strings to said separate storage locations and/or an identifier referring to said storage locations.

29. A computer program according to any of the claims 0 - 0 wherein said software code portions further include portions to encrypt said two or more output strings and/or additional output string and/or selected output strings.

30. A data carrier, stored with data loadable in a computer memory said data representing a computer program for running on a computer system at least including software code portions for performing generation of two or more output strings from which a first data string can be reconstructed said first data string being obtained from converting a representation of an object monitored by a monitoring apparatus and transmission of said output data strings to separate storage locations.

31. A data carrier according to claim 0 wherein said software code portions further include portions as described in at least one of the claims 0 - 0.

32. A data communication network comprising at least one monitoring apparatus generating a first data string by converting a representation of an object monitored by said monitoring apparatus said first data string being processed by a processor generating two or more output strings from which said first data string can be reconstructed said monitoring apparatus being communicatively connected to said data communication network by network communication means to transmit said two or more output strings over said data communication network to storage locations to store at least one of said one or more substrings.

FIG. 1

Fig.2

**European Patent Office**

## EUROPEAN SEARCH REPORT

Application Number

EP 01 20 3969

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| Y | GB 2 343 049 A (BAKER MARTIN JOHN) 26 April 2000 (2000-04-26) * page 3, line 13-15 * * page 6, line 13-15 * * page 9, line 12-18 * | 1-3,22, 30,32 | H04N7/167 G11B20/00 H04N7/18 |
| Y | WO 00 45296 A (ALM CARL AXEL ;AXIS AB (SE); TULLBERG JOACIM (SE)) 3 August 2000 (2000-08-03) * page 1, line 8 - line 14 * * page 2, line 12 - line 16 * * figure 3 * | 1-3,22, 30,32 | |
| A | PATENT ABSTRACTS OF JAPAN vol. 2000, no. 10, 17 November 2000 (2000-11-17) & JP 2000 195168 A (LG ELECTRONICS INC), 14 July 2000 (2000-07-14) * abstract * | 1-32 | |
| A | WO 01 22735 A (HEWLETT PACKARD CO) 29 March 2001 (2001-03-29) * page 6, line 13 - line 25 * * page 8, line 1 - line 18 * * page 12, line 9 - line 14 * | 1-32 | TECHNICAL FIELDS SEARCHED (Int.Cl.7) H04N G11B G06F |
| A | US 2001/029584 A1 (VAN DE HAAR PETER GEORGE) 11 October 2001 (2001-10-11) * paragraph [0018] * | 1-32 | |

The present search report has been drawn up for all claims

| Place of search | Date of completion of the search | Examiner |
|---|---|---|
| THE HAGUE | 26 April 2002 | Tito Martins, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 1 304 879 A1**

**ANNEX TO THE EUROPEAN SEARCH REPORT
ON EUROPEAN PATENT APPLICATION NO.**

EP 01 20 3969

This annex lists the patent family members relating to the patent documents cited in the above-mentioned European search report.
The members are as contained in the European Patent Office EDP file on
The European Patent Office is in no way liable for these particulars which are merely given for the purpose of information.

26-04-2002

| Patent document cited in search report | | Publication date | Patent family member(s) | | Publication date |
|---|---|---|---|---|---|
| GB 2343049 | A | 26-04-2000 | NONE | | |
| WO 0045296 | A | 03-08-2000 | AU | 2470300 A | 18-08-2000 |
| | | | DE | 10083904 T0 | 03-01-2002 |
| | | | GB | 2361600 A | 24-10-2001 |
| | | | WO | 0045296 A1 | 03-08-2000 |
| | | | SE | 9900325 A | 30-07-2000 |
| JP 2000195168 | A | 14-07-2000 | NONE | | |
| WO 0122735 | A | 29-03-2001 | WO | 0122735 A1 | 29-03-2001 |
| US 2001029584 | A1 | 11-10-2001 | WO | 0178395 A1 | 18-10-2001 |

EPO FORM P0459

For more details about this annex : see Official Journal of the European Patent Office, No. 12/82

13